# EUROPEAN PATENT APPLICATION

(11) **EP 1 260 843 A1**
(43) Date of publication of application: **27.11.2002**
(21) Application number: 02253265.9
(22) Date of filing: 09.05.2002
(51) Int. Cl.: G02B 6/44

(54) **Cable jointing enclosure**

(30) Priority: 15.05.2001 GB 0111793
(71) Applicant: Spirent plc, Crawley, West Sussex RH10 2QL (GB)
(72) Inventor: Foss, Raymond Charles, Plymouth, PL3 4NX (GB)
(74) Representative: Evans, Huw David Duncan

(57) **Abstract**

A cable jointing enclosure comprises a base 10 provided with a plurality of parallel tubular cable entry ports 11, an oval-section cover 14 for fitting to the base, and a plurality of storage trays 13 mounted in a stack within the enclosure, the stack extending perpendicular to the through axis of the entry ports 11. Each tray 13 is pivotally mounted to the base 10 about respective axes, which extend perpendicular to the axis to the through axis of the entry ports 11, for pivotal movement in opposite directions from a position wherein the plane of the tray 13 lies parallel to the through axis of the entry ports 11.

The enclosure is arranged so that the primary optical fibre cables 17 and the secondary optical fibre cables 18 enter the enclosure through respective ports 11 in the base 10. Individual fibres within the cables are then fed to selected trays 13 within the stack. The fibres within the cables 17,18 can feed directly into the trays 13 with the minimum of bending, since the stack of trays 13 extends perpendicular to the through axis of the ports 11. Thus, the minimum radius of curvature of any fibres is not exceeded. Also, since the trays 13 effectively pivot about an axis which extends perpendicular to the longitudinal axis of the fibres, the trays in the stack can be pivoted apart to gain access to a tray 13 so that an engineer can work on a required tray 13, to form a splice between cables or between a splitter device and a cable within the tray 13.

## Description

This invention relates to an enclosure for containing the joints between cables and more particularly to an enclosure for containing the joints between optical fibre cables.

The advent of data transmission over optical fibres since the early 1980's has done more to influence new technologies and network architectures than any other single factor. Optical fibre cables form the backbone of all modern terrestrial communication networks. It is now commonplace to route fibre to medium size businesses and fibre rich networks have evolved, driven by the competition to capture and sustain the multi-media communication services business.

The Telecommunications industries world-wide are undergoing fundamental changes brought about by deregulation, competition, and the availability of new technologies. The last big frontier for fibre deployment is routing of fibres to the home: This has yet to become a commercial reality largely because of the costs of installation, the improvement in copper cable digital technology and other competing technologies including satellite and mobile communications.

The deployment of fibre to the home today is not so much a technology challenge, but a commercial one. Network operators with an existing cable infrastructure have a commercial advantage in the pursuit to minimise installation costs. New entrants in the market have to install every thing at great cost and in a longer time span. All existing fibre architectures, cable ducts, jointing pits and overhead pole infrastructure need to be fully utilised and if all potential customers would take a fibre link instead of the traditional copper coaxial cable link, the economics would seem assured.

The current cost involved in installing fibre to the home means that only a small number of customers, desirable to have the latest, fastest telecommunications link would subscribe. Accordingly, it is envisaged that if such a fibre link were offered there would be relatively few subscribers. However, as future multi-media services demand bandwidth and greater speeds, it is envisaged that more customers will be forced to install such a link.

Fibre today is in both short supply and expensive. One inexpensive way of deploying fibre to the home is to blow the optical fibre cable through small diameter empty tubes that can be fed more easily through existing ducts or lashed to existing overhead lines.

Existing copper cables have pairs of wires dedicated to each customer going back to the telephone exchange or switch. Fibre has such a large bandwidth that thousands of customers can be linked together using the same fibre circuit. The customers can be connected directly to the fibre circuit in a ring topology, or to the branches of a passive optical splitter. The branches, like those of a tree, can be split many times from the trunk (single fibre) to the tentacles (the customers), offering an almost unlimited number of customer connections. Existing fibre backbones and fibre deployed to the business has ensured that in every city, town or village a fibre cable is likely to be within a relatively short distance of a residential customer.

The residential customer may only be a few metres or a few kilometres away from the nearest optical fibre cable. In the latter case, the customer could be connected to the primary cable via nodes which split the cable into individual secondary cables feeding each customer. If the cable is only a few metres away, the customer may be connected directly to the primary fibre cable in a ring topology.

In order to minimise cost, it is desirable to house all of the necessary fibre joints and splitters in existing underground ducts and trenches that are used for the copper cable infrastructure.

It is envisaged that one primary fibre cable could be split into a large number, typically 32 but perhaps 50, secondary cables feeding to customers or to other remote splitters which feed customers. Enclosures for housing the fibre joints and splitters are well known but hitherto these have not had both the capacity to house the required number of cables and the physical size to fit into existing ducts and trenches located adjacent residential customers.

Blown fibre cables have a number of difficulties over conventional fibre to cable. The fibre-carrying tubes are relatively inflexible and this makes it difficult to use a conventional enclosure where the tubes have to be bent substantially to feed to splice trays and splitters within the enclosure. Also, in order to improve access to the splice trays, it is commonplace to pivotally mount the trays the trays inside the enclosure and it will be appreciated that the fibre-carrying tubes inhibit this pivotal movement and limit the degree to which the trays can be pivoted.

Blown fibre cables feeding from a customer are provided with a small connector at their proximal end to connect the primary circuit to the secondary or residential circuit. The connector should be placed in a straight portion within the enclosure, in order to avoid the fibre from snagging on the sharp interface inside the tubes.

In addition, any bends in the fibre tubes must have minimum radius of curvature to enable the fibres to be blown through the tubes satisfactorily. The inflexibility of the cables and the limited space in the small ducts and trenches could require that the joint has to be worked on in-situ in the duct or trench.

We have now devised a cable jointing enclosure which alleviates the above-mentioned problems and yet meets all of the above-mentioned requirements.

In accordance with this invention there is provided a cable jointing enclosure comprising a base provided with a plurality of parallel tubular cable entry ports, a cover for fitting to the base, a plurality of storage trays mounted in a stack within the enclosure, the stack extending perpendicular to the through axis of the entry ports, each tray being pivotally mounted to the base about respective axes, which extend perpendicular to the axis to the through axis of the entry ports, for pivotal movement in opposite directions from a position wherein the plane of the tray lies parallel to the through axis of the entry ports.

The enclosure is arranged so that the primary optical fibre cable(s) and the secondary optical fibre cables enter the enclosure through respective ports in the base. Individual fibres and/or fibre-carrying tubes within the cables are then fed to selected trays within the stack. It will be appreciated that since the stack of trays extend perpendicular to the through axis of the ports, the plane of trays lies substantially parallel to the through axes of the ports. Accordingly, the fibres and/or tubes within the cables can feed directly into the trays with the minimum of bending.

Accordingly, the minimum radius of curvature of any tubes and fibres is not exceeded. Also, since the trays effectively pivot about an axis which extends perpendicular to the longitudinal axis of the tubes and fibres, the trays in the stack can be pivoted apart to gain access to the tray so that an engineer can work on a required tray, to form a splice between cables or between a splitter device and a cable within the tray.

The enclosure is compact and will fit into existing ducts and trenches of an existing copper cable infrastructure.

Preferably the axes about which the trays pivot lie in a common plane extending normal to the through axis of the entry ports.

Preferably, the cover is a tubular cover which extends axially of the through axis of the cable entry ports, the cover preferably being detachable from the base along a line which extends axially of itself. Thus, it is relatively easy for an engineer to remove the cover to work on the trays whilst the enclosure is in-situ in a duct or trench.

Preferably the cover comprises a transverse axis which is elongated with respect to its orthogonal axis.

It is envisaged that a small number of large trays would be required within the closure, thus in order to efficiently use the space within the enclosure and minimise the size of the enclosure, the stack preferably extends axially of the short transverse axis of the cover: this also provides room for coils of excess fibre to be stored alongside the stack.

Preferably the cover is oval in cross-section.

Preferably opposite side edges of each tray converge away from the base so that the trays are wider adjacent the base than they are away from the base.

Preferably each tray is semi-oval or semi-circular, although they may also be parallel-sided.

An embodiment of this invention will now be described by way of an example only and with reference to the accompanying drawing, in which:
FIGURE 1 is a bottom view of an optical fibre cable jointing enclosure in accordance with this invention;
FIGURE 2 is a sectional view along the line II-II of Figure 1;
FIGURE 3 is a sectional view along the line III-III of Figure 1;
FIGURE 4 is a sectional view showing the enclosure of Figure 1 installed in a pit;
FIGURE 5 is a sectional view showing the enclosure of Figure 1 installed in a duct; and
FIGURE 6 is a sectional view along the line VI-VI of Figure 5.

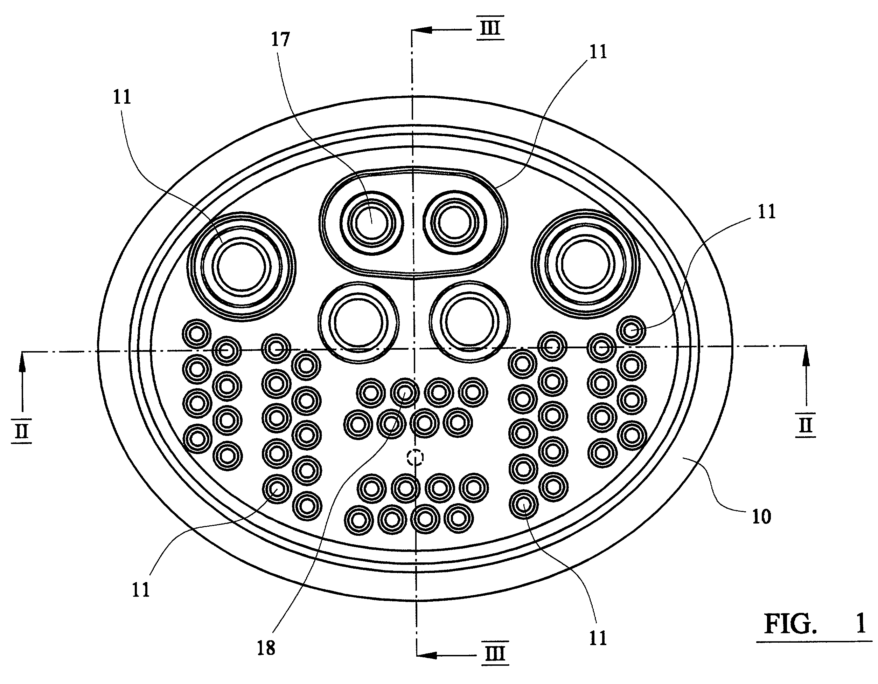

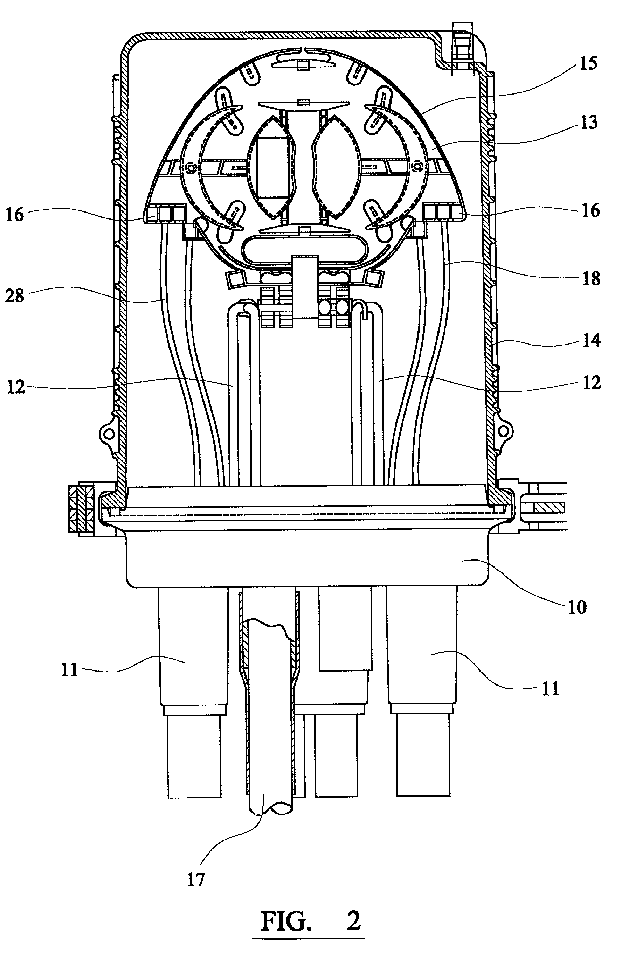

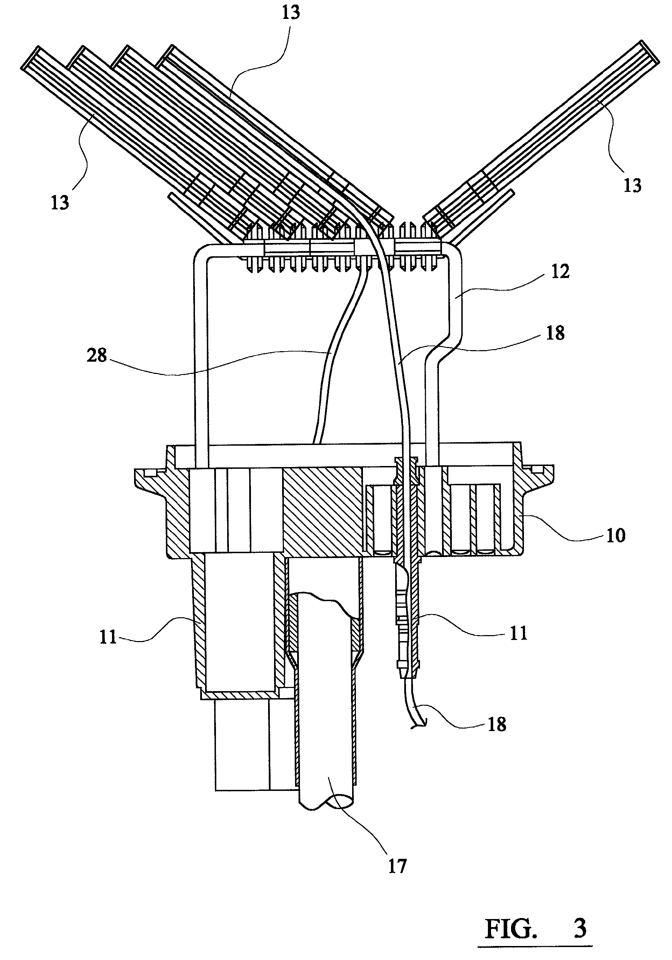

Referring to Figures 1 to 4 of the drawings, there is shown an optical fibre jointing enclosure which comprises an oval base 10 formed with a plurality of parallel tubular cable entry ports 11. A pair of parallel U-shaped metal support members 12 project upwardly from the base 10, parallel to the through axis of the ports 11.

The support members 12 comprise respective parallel straight portions intermediate the respective upright arms, which extend perpendicular to the through axis of the ports 11. A plurality of trays 13 are mounted in a stack which extends perpendicular to the through axis of the ports 11 and axially of the straight portion of the support members 12. Each tray 13 is pivotally connected, at respective spaced apart points along its edge nearest to the base 10, to the straight portion of the support frame 12 for pivoting about an axis which extends perpendicular to the through axis of the ports 11.

An oval-section tubular cap-ended cover 14 is provided for fitting to the base 10 to enclose the trays 13.

Each tray 13 is substantially semi-circular and comprises a wide edge adjacent the base 10 and opposite side edges which curve arcuately inwards towards each other away from the base 10.

A peripheral wall 15 extends around one side of each tray 13 to enclose any splices or splitters mounted on the tray. Openings are formed in the peripheral wall 15 to provide ports 16 for the entry and exit of fibres and cables extending from the tray 13.

Depending on requirements, one or more of the trays 13 can either be mounted back-to-back with another tray or formed with a peripheral wall on both sides, in either case to form a double-sided tray which is able to contain, for example, a splitter device on one side and fibres on the other side. Preferably apertures are provided to enable fibres to pass between opposite sides of the double-sided tray.

In use, in a passive optical network, the primary optical fibre cable 17 enters the base through one of the larger ports 11 in the base 10. Fibres from the primary cable are then fed through tubes 28 to one side of respective trays 13 where they are spliced or connected to the fibres leading from the input to optical splitter devices housed on the trays. The multiple output fibres leading from each splitter extend through an opening formed in the floor of its tray 13 to the opposite side where they are spliced or connected to fibres leading to customers or to other splitters located in remote enclosures or within other trays of the same enclosure.

The fibres leading to customers and to remote enclosures are blown through tubes 18 which are fastened at their proximal end to the trays 13.

It will be seen that the tubes 18 extending between the trays 13 and the ports 11 are not unduly bent since the plane of the trays 13 lies substantially parallel to the axis of the ports 11.

The trays 13 can pivot apart, in order to allow an engineer access to work on a tray 13 within the stack. The trays 13 pivot about an axis which extends substantially perpendicular to the axis of the fibres extending from the trays and thus the pivoting of the trays is neither inhibited by any inflexibility of the tubes 18. Also, the tubes 18 are not unduly bent as the trays 13 pivot.

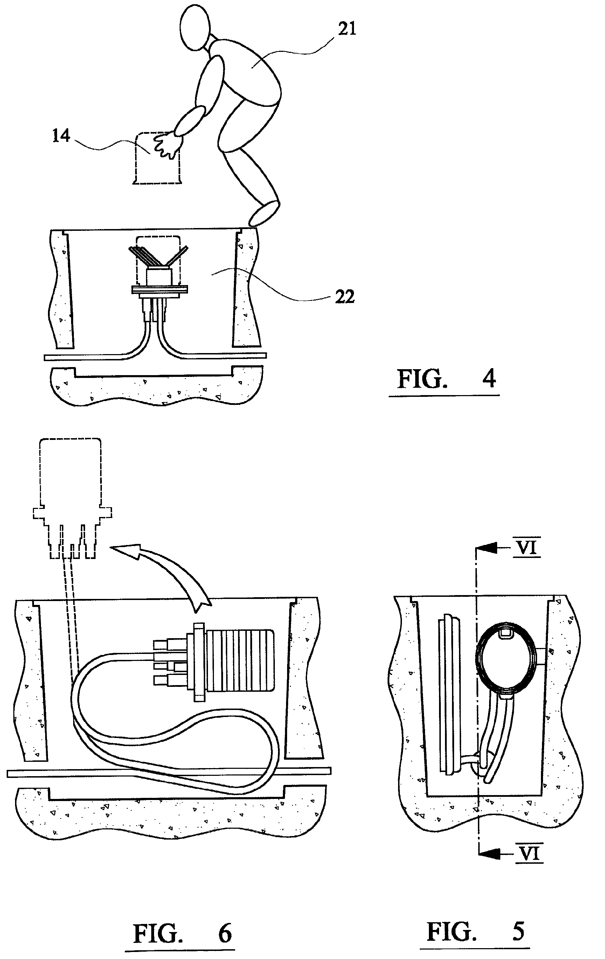

Referring to Figure 4, the enclosure can be mounted in its upright position in an existing pit 20 formed in the ground. In order to gain access to the trays, the engineer 21 merely has to remove the cover leaving the rest of the enclosure in-situ.

The enclosure is small and compact and will easily fit into pits used in copper wire telecommunications networks.

Referring to Figures 5 and 6, the enclosure can be mounted on its side in a pit and the engineer then merely has to lift the enclosure out of the pit, allowing some of the coiled cables within the pit to uncoil.

The present invention provides a practical solution to the problem of providing fibre to the home using the existing network infrastructure and small bore blown fibre tubes by providing an optical fibre jointing enclosure which fits into a pit of the kind widely used in existing copper wire telecommunication networks.

The commercial aspects of blown fibre offers the deployment of small diameter empty tubes that can be fed more easily through existing ducts or lashed to existing overhead lines. The key interface is the flexibility of the enclosure to be of a low cost and a size to be able to fit into existing pits.

## Claims

1. A cable jointing enclosure comprising a base provided with a plurality of parallel tubular cable entry ports, a cover for fitting to the base, a plurality of storage trays mounted in a stack within the enclosure, the stack extending perpendicular to the through axis of the entry ports, each tray being pivotally mounted to the base about respective axes, which extend perpendicular to the axis to the through axis of the entry ports, for pivotal movement in opposite directions from a position wherein the plane of the tray lies parallel to the through axis of the entry ports.

2. A cable jointing enclosure as claimed in claim 1, in which the axes about which the trays pivot lie in a common plane extending normal to the through axis of the entry ports.

3. A cable jointing enclosure as claimed in claims 1 or 2, in which the cover is a tubular cover which extends axially of the through axis of the cable entry ports.

4. A cable jointing enclosure as claimed in claim 3, in which the cover is detachable from the base along a line which extends axially of itself.

5. A cable jointing enclosure as claimed in any preceding claim, in which the cover comprises a transverse axis which is elongated with respect to its orthogonal axis.

6. A cable jointing enclosure as claimed in claim 5, in which the stack preferably extends axially of the short transverse axis of the cover

7. A cable jointing enclosure as claimed in claims 5 or 6, in which the cover is oval in cross-section.
